(19) Europäisches Patentamt / European Patent Office / Office européen des brevets

(11) **EP 2 157 654 A1**

## (12) EUROPEAN PATENT APPLICATION

(43) Date of publication:
**24.02.2010 Bulletin 2010/08**

(51) Int Cl.:
*H01M 10/39* (2006.01)   *H01M 10/44* (2006.01)
*H01M 10/50* (2006.01)

(21) Application number: **09252005.5**

(22) Date of filing: **18.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **20.08.2008 JP 2008211664**

(71) Applicant: **NGK INSULATORS, LTD.**
**Nagoya-City, Aichi Pref.  467-8530 (JP)**

(72) Inventor: **Tamakoshi, Tomio**
**Nagoya City,**
**Aichi-ken, 467-8530 (JP)**

(74) Representative: **Paget, Hugh Charles Edward et al**
**Mewburn Ellis LLP**
**33 Gutter Lane**
**London**
**EC2V 8AS (GB)**

(54) **Heater power supply method of sodium-sulfer battery**

(57) There is disclosed means for stably supplying a power to a heater so that the temperature of a sodium-sulfur battery does not lower even in a case where service interruption occurs in a power system in an interconnected system. When a wind power generation device 7 generates the power and a sodium-sulfur battery 3 does not reach a charge end during the service interruption of a power system 1, the output of the wind power generation device 7 is supplied to a heater 6 and the sodium-sulfur battery 3 while controlling the charge of the sodium-sulfur battery 3 so as to satisfy $P_G = P_H + P_{NC}$ ($P_G$: the output of the power generation device, $P_H$: the power to be supplied to the heater, and $P_{NC}$: the power to be charged into the sodium-sulfur battery).

FIG.1

( WIND POWER GENERATION, PHOTOVOLTAIC POWER GENERATION, GEOTHERMAL POWER GENERATION OR THE LIKE)

**Description**

BACKGROUND OF THE INVENTION

Field of the Invention

The present invention relates to a heater power supply method of a sodium-sulfur battery in an interconnected system or the like where a renewable energy device in which the output of a wind power generation device or the like fluctuates is combined with a power storage compensation device having a plurality of sodium-sulfur batteries to supply the power to a power system.

Description of the Related Art

In recent years, a renewable energy device for producing a power from wind power, photovoltaic energy, geothermal energy or the like has attracted attention and has been put to practical use. The device for renewable energy (renewable energy device) is a clean power generation device which does not use any limited natural resource such as petroleum but uses a naturally and exhaustlessly present energy source, and the device can suppress the emission of carbon dioxide. Therefore, from a viewpoint of the prevention of global warming, the number of corporations, autonomous communities and the like which introduce the device is increasing.

However, energy brought by the renewable fluctuates every moment, whereby there is an obstacle to the popularization of the device for renewable energy, because the fluctuation of output cannot be avoided.

Examples of means for removing this obstacle include the construction of a power system in which the device for renewable energy is combined with a power storage compensation device. Moreover, in regard with the power storage compensation device of such a power system, a device mainly constituted of a sodium-sulfur battery (a secondary battery) is preferably employed.

The sodium-sulfur battery has advantages such as a high energy density and an excellent high-speed response, and hence by the power storage compensation device in which the sodium-sulfur battery is used as a power storage source and in which a bidirectional converter for controlling charge and discharge is also disposed, it is possible to compensate for the fluctuation of the output of the renewable energy device which could occur on the order of several hundred milliseconds to several seconds.

The sodium-sulfur battery disposed in the power storage compensation device is a high temperature secondary battery in which molten metal sodium as a cathode active substance is disposed on one hand whereas molten sulfur as an anode active substance is disposed on the other hand. Both the substances are isolated via a β-alumina solid electrolyte having a selective permeability to sodium ions. This sodium-sulfur battery is kept at a high temperature of around 300°C during an operation so as to exert the function and performance of the battery. Moreover, to keep the sodium-sulfur battery at the high temperature, a heater is disposed, and a power source of the heater is a power system as disclosed in Non-Patent Documents 1, 2.

It is to be noted that even in the high temperature secondary battery other than the sodium-sulfur battery, for example, a zebra battery or a sodium molten salt battery, the heater is disposed, and the power of the heater is supplied from the power system as disclosed in Non-Patent Documents 3, 4.

[Non-Patent Document 1] The Journal of the Japan Society of Plasma Science and Nuclear Fusion Research, vol. 80 (2004), No. 7, pp. 563 to 567

[Non-Patent Document 2] Additional Volume of Monthly Clean Technology, Service Interruption Brownout Phenomenon Countermeasure in Clean Room, edited by Clean Technology Editorial Board, Japan Industrial Publishing Co., Ltd., pp. 64 to 69

[Non-Patent Document 3] To be presented at the AECV conference, Noordwijkerhout, The Netherlands, 2002, pp. 1 to 9

[Non-Patent Document 4] Showa Aircraft Industry Co., Ltd., High Performance Secondary Battery: Brochure of Metal/Salt Battery (Sodium Molten Salt Battery)

However, such a conventional heater power supplying method has a problem as follows.

That is, when the power of the heater of the sodium-sulfur battery in an interconnected system is supplied from the power system and service interruption occurs in the power system, the heater does not operate, and the temperature of the sodium-sulfur battery (the high temperature secondary battery) lowers. When the temperature of the sodium-sulfur battery is below an operable temperature, after service recovery, the heater has to be operated to raise the temperature again. A further time is required for restarting the operation, and stable power supply by the interconnected system cannot be performed immediately after the service recovery.

Moreover, in a place independent from the power system, for example, an isolated island, the renewable energy based on the wind power, the photovoltaic energy or the like is (or has to be) a main power generation source on occasion, and in such a case, it is difficult to secure a stable heater power source by the main power generation source. When the power source cannot stably be supplied to the heater, the heater does not operate, and a problem that the temperature of the sodium-sulfur battery lowers easily occurs.

Furthermore, in a case where any power source is not supplied to the heater for a long time and the temperature of the sodium-sulfur battery lowers to a temperature at which the battery active substance solidifies, the failure of an electric cell (of the sodium-sulfur battery) might be induced. When battery does not reached to charge end (in a discharged state), the amount of sodium polysulfide having a high solidifying point is large, and the probability of the failure of this electric cell increases.

## SUMMARY OF THE INVENTION

The present invention has been developed in view of such a situation, and an object thereof is to provide means for stably supplying a power to a heater so that the temperature of a sodium-sulfur battery does not lower even in a case where service interruption occurs in a power system of an interconnected system in which a renewable energy device whose output fluctuates is combined with a power storage compensation device constituted of devices such as a plurality of sodium-sulfur batteries, or in an independent system in which the renewable energy device whose output fluctuates is used as a main power generation source in an isolated island or the like.

As a result of repeated investigations, it has been found that the above object can be achieved by performing such control as to change a supply path of the heater power or the like based on the state (whether or not power generation can be performed) of the device for renewable energy and the state (whether or not the discharge can be performed) of the sodium-sulfur battery in a case where, for example, the service interruption occurs in the power system of the interconnected system. Specifically, according to the present invention, the means is provided as follows.

That is, according to the present invention, there is first provided a heater power supply method of a sodium-sulfur battery (hereinafter referred to as a first heater power supply method) which supplies a power to a heater of the sodium-sulfur battery disposed in a power storage compensation device to compensate for the fluctuation of an output (the output power) of a power generation device in an interconnected system where the power generation device whose output (the output power) fluctuates is combined with the power storage compensation device to supply the power to a power system, the method including the steps of: supplying the output (the output power) of the power generation device to the sodium-sulfur battery and supplying (outputting) the output (of the power generation device) to the heater while controlling the charge (input) of the sodium-sulfur battery so as to satisfy the following equation (1), when the power generation device generates the power (has the output) and the sodium-sulfur battery does not reach a charge end (has a chargeable state) during the service interruption of the power system:

$$P_G = P_H + P_{NC} \quad \cdots \quad (1)$$

wherein $P_G$: the output (the output power) of the power generation device,
$P_H$: the power to be supplied to the heater (the input power (for the heater)), and
$P_{NC}$: the power to be charged into the sodium-sulfur battery (the input power).

In the first heater power supply method of the sodium-sulfur battery according to the present invention, when the power generation device does not generate any power (there is not any output) or the sodium-sulfur battery reaches the charge end (the charge cannot be performed) during the service interruption of the power system, the discharge (the output) of the sodium-sulfur battery is performed, and the power is preferably supplied (output) to the heater by the discharge (the output) of the battery.

Next, according to the present invention, there is provided a heater power supply method of a sodium-sulfur battery (hereinafter referred to as a second heater power supply method), to supply a power to a heater of the sodium-sulfur battery disposed in a power storage compensation device to compensate for the fluctuation of an output of a power generation device in an independent system in which the power generation device whose output fluctuates is combined with the power storage compensation device to supply the power to a load, the method including the steps of: supplying the output of the power generation device to the sodium-sulfur battery and supplying the output (of the power generation device) to the heater while controlling the charge of the sodium-sulfur battery so as to satisfy the following equation (2), when the power generation device generates the power and the sodium-sulfur battery does not reach a charge end. The independent system is not a cooperated system but is an independent power (supply) system, and includes a case where a connectable power system is not present.

$$P_G = P_H + P_{NC} + P_L \quad \cdots \quad (2)$$

wherein $P_G$: the output (the output power) of the power generation device,
$P_H$: the power to be supplied to the heater (the input power (for the heater)),
$P_{NC}$: the power to be charged into the sodium-sulfur battery (the input power), and
$P_L$: the power to be supplied to a general load (the input power for the load)).

In the second heater power supply method of the sodium-sulfur battery according to the present invention, when the power generation device does not generate any power or the sodium-sulfur battery reaches the charge end, the discharge of the sodium-sulfur battery is performed, and the power is preferably supplied to the heater by the discharge of the battery.

When the heater power supply method of the sodium-sulfur battery according to the present invention is simply referred, both the first heater power supply method and the second heater power supply method are indicated. The heater power supply method of the sodium-sulfur battery according to the present invention is preferably used in a case where the power generation device whose output fluctuates is a renewable energy device using at least one type of natural energy selected from the group consisting of wind power, photovoltaic energy and geothermal energy.

In the first heater power supply method of the sodium-sulfur battery according to the present invention, when the power generation device generates the power (has the output) and the sodium-sulfur battery does not reach the charge end during the service interruption of the power system, the output of the power generation device is supplied to the heater and the sodium-sulfur battery while controlling the charge of the sodium-sulfur battery so as to satisfy $P_G = P_H + P_{NC}$ ($P_G$: the output of the power generation device, $P_H$: the power to be supplied to the heater, and $P_{NC}$: the power to be charged into the sodium-sulfur battery). Furthermore, in a preferable configuration of the method, when the power generation device does not generate any power or the sodium-sulfur battery reaches the charge end during the service interruption of the power system, the discharge of the sodium-sulfur battery is performed, and the power is supplied to the heater by the discharge of the battery. Consequently, even during the service interruption, the stable power can be supplied to the heater.

Therefore, even when the service interruption occurs, the heater continues to operate, and the temperature of the sodium-sulfur battery can be prevented from being lowered. When the device for renewable energy operable even during the service interruption simply supplies the power to the heater, owing to the fluctuation of the output of the natural energy, it is difficult to stably supply the power to the heater. However, according to the first heater power supply method of the sodium-sulfur battery according to the present invention, the stable power supply to the heater can be achieved.

As long as the relation of $P_G = P_H + P_{NC}$ is satisfied, there is not any voltage rise, and the stable power can be supplied to the heater. However, when there is excess or deficiency (the relation is not satisfied), the voltage rises or lowers, or a frequency fluctuates, and the stable power cannot be supplied to the heater. The first heater power supply method of the sodium-sulfur battery according to the present invention can prevent such a problem.

The temperature of the sodium-sulfur battery is kept at the operable temperature even during the service interruption, and hence after service recovery, the temperature of the sodium-sulfur battery does not have to be raised, and the operation of the sodium-sulfur battery can immediately be restarted. Therefore, the stable power supply by the interconnected system can immediately be performed after the service interruption.

Moreover, even if the service interruption continues for a long time, there is an only small possibility that the temperature of the sodium-sulfur battery lowers to a temperature at which the battery active substance solidifies, and hence the failure of an electric cell (of the sodium-sulfur battery) does not easily occur. Moreover, in principle, the sodium-sulfur battery is controlled on the side of the charge end, and hence in this state, the amount of sodium polysulfide having a high solidifying point is small, and even from this viewpoint, the failure of the electric cell does not easily occur. In principle, in a case where there continues a state in which the power generation device does not generate any power during the service interruption, the sodium-sulfur battery comes to a discharge end by the power supply (the discharge) to the heater, but a possibility that the battery comes to such a situation is small.

It is to be noted that in Japan, the constitution of the power system is operated or maintained, and large-scaled service interruption for a long time does not occur frequently, but even in an advanced country other than Japan, the occurrence of the service interruption is not unusual. Therefore, the first heater power supply method of the sodium-sulfur battery according to the present invention is required even in Japan, but especially in a country other than Japan, it is hard to obtain this means for stably supplying the power to the heater, when the power storage compensation device using the sodium-sulfur battery is combined with the device for renewable energy to construct the interconnected system.

In the second heater power supply method of the sodium-sulfur battery according to the present invention, when the power generation device generates the power (has the output) and the sodium-sulfur battery does not reach the charge end, the output of the power generation device is supplied to the heater and the sodium-sulfur battery while controlling the charge of the sodium-sulfur battery so as to satisfy $P_G = P_H + P_{NC} + P_L$ ($P_G$: the output of the power generation device, $P_H$: the power to be supplied to the heater, $P_{NC}$: the power to be charged into the sodium-sulfur battery, and $P_L$: the power to be supplied to the general load). Furthermore, in a preferable configuration of the method, when the power generation device does not generate any power or the sodium-sulfur battery reaches the charge end, the discharge of the sodium-sulfur battery is performed, and the power is supplied to the heater by the discharge of the battery. Consequently, the stable power can be supplied to the heater.

Therefore, even when the renewable energy device based on the wind power, the photovoltaic energy or the like is used as the main power generation source in a place independent from the power system, for example, in an isolated island or the like, the power source can stably be supplied to the heater, and hence the temperature of the sodium-sulfur battery is prevented from being lowered.

In the heater power supply method of the sodium-sulfur battery according to the present invention, the power can be supplied to not only the heater but also another auxiliary device (a control device or the like).

BRIEF DESCRIPTION OF THE DRAWINGS

Fig. 1 is a system constitution diagram showing one example of an interconnected system, and is a diagram showing a steady operation state of the interconnected system;
Fig. 2 is a system constitution diagram showing the example of the interconnected system, and is a diagram showing a non-steady operation state of the interconnected system;
Fig. 3 is a system constitution diagram showing the example of the interconnected system, and is a diagram showing another non-steady operation state of the interconnected system; and
Fig. 4 is a system constitution diagram showing one example of an independent system, and is a diagram showing a steady operation state of the independent system.

[Description of Reference Numerals]

1     power system
2     control device
3     sodium-sulfur battery
4     bidirectional converter
5     power storage compensation device
6     heater
7     wind power generation device
8     interconnected system
9     transformer
18    independent system
41,   42, 43, 44 and 45 power meter

DESCRIPTION OF THE PREFERRED EMBODIMENT

Hereinafter, the present invention will be described in accordance with an embodiment appropriately with reference to the drawings, but the present invention should not be limited to the embodiment when interpreted. The present invention can variously be changed, modified, improved or replaced based on the knowledge of a person with ordinary skill without departing from the scope of the present invention. For example, the drawings show a preferable embodiment of the present invention, but the present invention is not restricted by any configuration or information shown in the drawings. To carry out or verify the present invention, means similar or equivalent to means described in the present description can be applied, but preferable means is the following means.

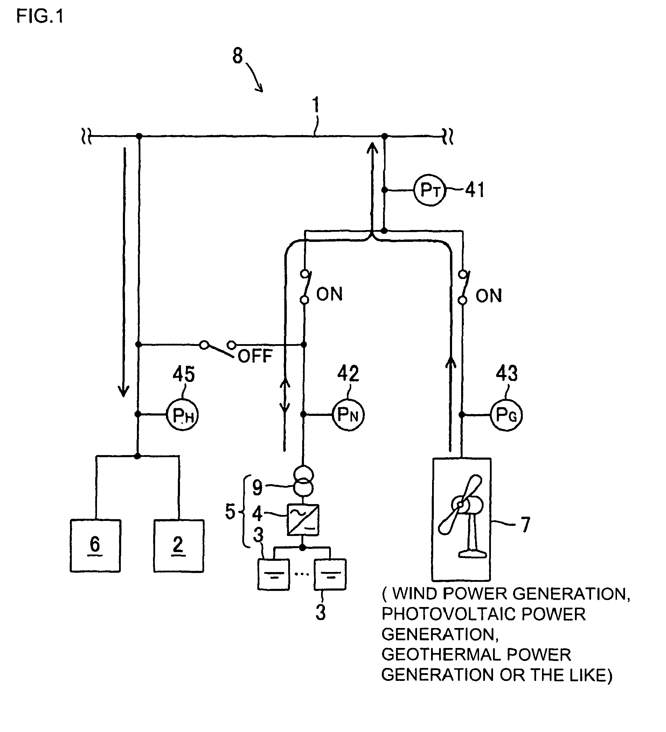

[Interconnected System] Figs. 1 to 3 are system constitution diagrams showing one example of an interconnected system having a power generation device whose output fluctuates and a power storage compensation device, and in Figs. 1 to 3, arrows show the flow of power supply.

An interconnected system 8 shown in Figs. 1 to 3 has a wind power generation device 7 (one example of a device for renewable energy; as another device for renewable energy, a photovoltaic power generation device, a geothermal power generation device or the like is applicable) which converts the force of wind into the rotation of a windmill to turn a power generator, and a power storage compensation device 5, and the system also has a control device 2 and a heater 6 of a sodium-sulfur battery 3. Moreover, the power storage compensation device 5 includes a sodium-sulfur battery 3 as a secondary battery capable of receiving and outputting a power, a bidirectional converter 4 having a direct current/ alternate current converting function, and a transformer 9. The bidirectional converter 4 can be constituted of, for example, a chopper and/or an inverter/converter. It is to be noted that a plurality of systems each including the wind power generation device 7 and the sodium-sulfur battery 3 (the power storage compensation device 5) are arranged on occasion.

Fig. 1 shows a steady operation state in which the wind power generation device 7 generates and supplies the power to a power system 1 and in which the power storage compensation device 5 (the sodium-sulfur battery 3) discharges and supplies the power to the power system 1 while compensating for the generated fluctuating power of the wind power generation device 7. The interconnected system 8 is usually operated in this steady operation state which is a steady operation mode. In the steady operation mode, a power source of the control device 2 and the heater 6 is the power system 1.

In the steady operation state of the interconnected system 8, the power storage compensation device 5 (the sodium-sulfur battery 3) discharges or charges the power, and a power $P_N$ (a charged power $P_{NC}$ or a discharged power $P_{ND}$) measured by a power meter 42 compensates for the output fluctuation of the power (a power $P_G$ measured by a power meter 43) generated by the wind power generation device 7. Specifically, the charge/discharge of the sodium-sulfur battery 3 is controlled so that the power (a power $P_T$ measured by a power meter 41) output from the whole interconnected system 8 satisfies $P_T = P_G + P_{ND} = $ constant ($P_{ND} = P_T - P_G$) or $P_T = P_G - P_{NC} = $ constant ($-P_{NC} = P_T - P_G$) for at least a predetermined period, whereby the power $P_N$ is adjusted so that the power $P_T$ output from the whole interconnected system 8 is a stable power having a satisfactory quality, and the power is supplied to, for example, the power system 1 between a distributing transform station and a power demand household.

The charge/discharge of the sodium-sulfur battery 3 can be controlled so that a charge end or discharge end is not reached, when a stored energy is managed and monitored by a control device or the like to change the power $P_T$ as a target value. For example, when $P_T > P_G$ for the predetermined period, the sodium-sulfur battery 3 properly discharges the power for the period, and the stored energy decreases. On the other hand, when $P_T < P_G$ for the predetermined period, the sodium-sulfur battery 3 eccentrically charges the power for the period, and the stored energy increases. If the discharge end is reached, the charge of the sodium-sulfur battery 3 is controlled so that the charged power $P_{NC}$ has a relation of $P_{NC} = P_G$, whereby the fluctuating power $P_G$ is compensated, and the power $P_T$ output from the whole interconnected system 8 can be 0 (constant).

When the sodium-sulfur battery 3 discharges or charges the power, based on the output (the power $P_G$) from the wind power generation device 7, the power storage compensation device 5 changes the control target value of the bidirectional converter 4 so as to input or output the power for compensating for the output from the wind power generation device, whereby the power can be charged into or discharged from the sodium-sulfur battery 3 to absorb the output fluctuation of the wind power generation device 7. The stable power having a satisfactory quality can be supplied by using the renewable energy device (the wind power generation device 7) which hardly emits carbon dioxide and the sodium-sulfur battery 3 (the power storage compensation device 5). Consequently, the interconnected system 8 can be considered to be a preferable power generation system.

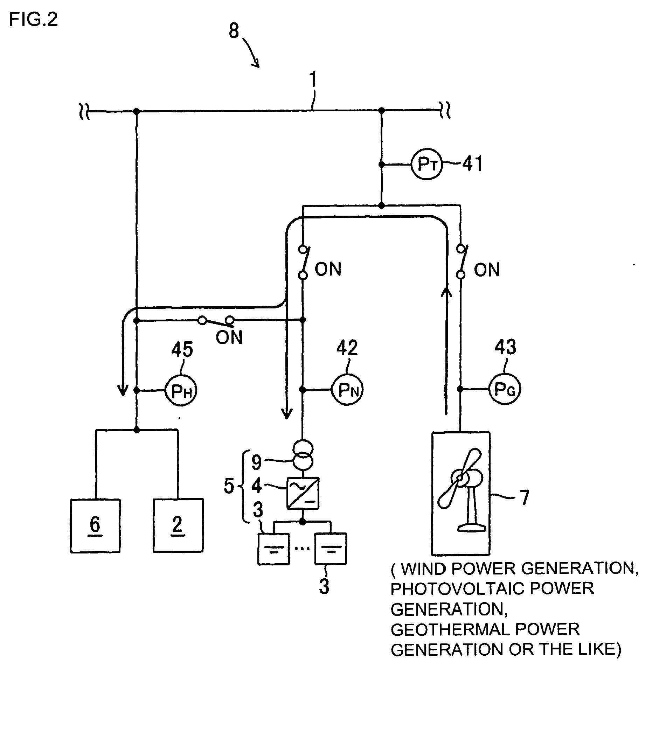

Fig. 2 shows one state (one non-steady operation state) during the service interruption of the power system 1. This is a state in which the wind power generation device 7 generates the power and in which the sodium-sulfur battery 3 does not reach the charge end.

In case of the occurrence of the service interruption in the power system 1, when the wind power generation device 7 generates the power and the sodium-sulfur battery 3 does not reach the charge end, the mode shifts to a non-steady operation mode 1 for realizing this non-steady operation state, and the output (the power $P_G$) of the wind power generation device 7 is compensated by the sodium-sulfur battery 3 and is supplied to the heater 6 and the control device 2. Specifically, the charged power $P_{NC}$ of the sodium-sulfur battery 3 is controlled so as to have a relation of $P_G = P_H + P_{NC}$, to stabilize the supply power $P_H$ to the heater 6 and the control device 2. In case of service recovery, the mode may be returned to the steady operation mode. Since the power source is supplied to the heater 6 and the control device 2 and the temperature of the sodium-sulfur battery 3 does not lower, the system can immediately be operated in the steady operation mode. It is to be noted that the power consumption of the control device 2 is only slight, and hence the power $P_H$ is simply referred to as the supply power to the heater in the present description.

It can be judged based on the output (the power $P_G$) from the wind power generation device 7 whether or not the wind power generation device 7 is generating the power. Not only the present output situation but also weather information are obtained, and the amount of the power to be generated by the wind power generation device 7 for a predetermined period is predicted, whereby the mode may selectively be shifted to this non-steady operation mode 1. It can be judged whether or not the sodium-sulfur battery 3 reaches the charge end, when the stored energy is managed and monitored by the control device or the like. For example, when the stored energy is larger than 90% of a rated battery capacity, it can be judged that the battery reaches the charge end. When the sodium-sulfur battery is not in the vicinity of the charge end or discharge end, the battery voltage during the operation of the battery is substantially constant. However, the voltage clearly increases in the vicinity of the charge end. Therefore, the vicinity of the charge end is detected in accordance with the battery voltage during the operation, and the management value of the stored energy in the control device or the like is preferably reset.

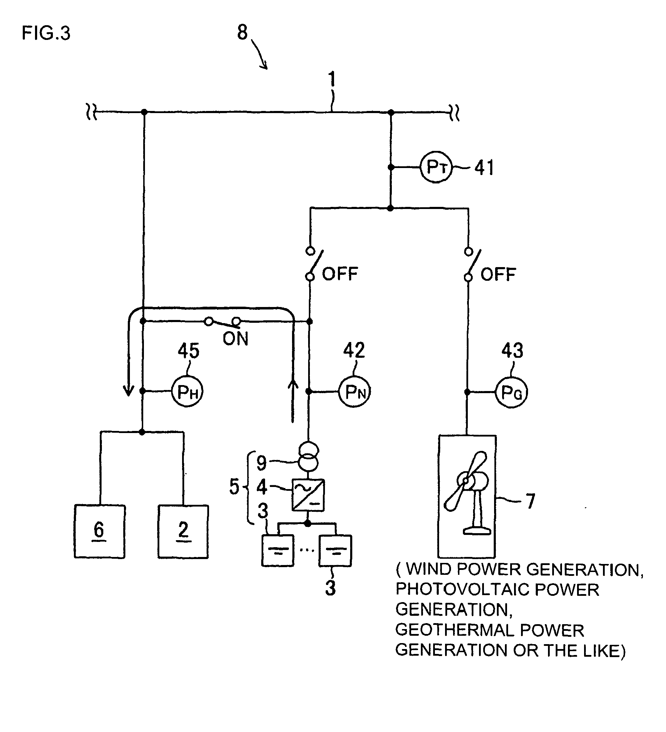

Fig. 3 shows another state (another non-steady operation state) during the service interruption of the power system 1. This state is a case where the wind power generation device 7 does not generate any power or the sodium-sulfur battery 3 reaches the charge end.

During the occurrence of the service interruption in the power system 1, even in a case where first in the non-steady operation mode 1, the power generated by the wind power generation device 7 is supplied to the heater 6 or is not supplied thereto, when the sodium-sulfur battery 3 reaches the charge end, the fluctuation of the power generated by the wind power generation device 7 cannot be absorbed. Therefore, when the charge end is reached, the mode is shifted to a non-steady operation mode 2 for realizing this non-steady operation state, and the wind power generation device 7 is disconnected regardless of whether or not the power is generated, whereby the power is discharged from the sodium-sulfur battery 3 so as to obtain a relation of $P_H = P_{ND}$, and the power is stably supplied to the heater 6. In a stage in which the discharge of the sodium-sulfur battery 3 advances (in a stage in which depth shifts from the charge end to a discharge side), the mode shifts to the non-steady operation mode 1 again, and the power can be supplied from the wind power generation device 7 to the heater 6 and the control device 2.

Moreover, during the occurrence of the service interruption in the power system 1, even in a case where first in the non-steady operation mode 1, the power generated by the wind power generation device 7 is supplied to the heater 6 or the like or is not supplied thereto, when the wind power generation device 7 does not generate the power any more, the power to be supplied to the heater 6 or the like is cut. To solve the problem, in a case where the wind power generation device 7 does not generate any power or it is predicted based on the weather information that the amount of the power to be generated by the wind power generation device 7 for the predetermined period is small, the mode shifts to thus non-steady operation mode 2 to disconnect the wind power generation device 7, and the power is discharged from the sodium-sulfur battery 3 to obtain a relation of $P_H = P_{ND}$,

whereby the power is stably supplied to the heater 6. When the wind power generation device 7 generates the power, the mode shifts to the non-steady operation mode 1 again, and the power may be supplied from the wind power generation device 7 to the heater 6 and the control device 2. Furthermore, in the case of the service recovery, the mode may be returned to the steady operation mode.

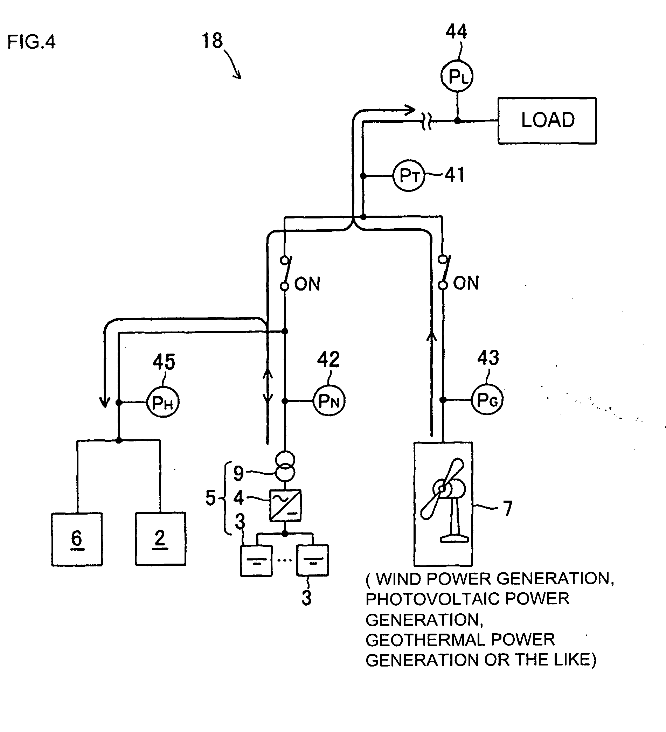

[Independent System] Fig. 4 is a system constitution diagram showing one example of an independent system having a power generation device whose output fluctuates and a power storage compensation device, and in Fig. 4, arrows show the flow of power supply.

An independent system 18 shown in Fig. 4 is not a cooperated system, but the system has the same constituent elements as those of the interconnected system 8. That is, the independent system has a wind power generation device 7 (one example of a device for renewable energy; as another device for renewable energy, a photovoltaic power generation device, a geothermal power generation device or the like is applicable) which converts the force of wind into the rotation of a windmill to turn a power generator, and a power storage compensation device 5, and the system also has a control device 2 and a heater 6 of a sodium-sulfur battery 3. Moreover, the power storage compensation device 5 includes a sodium-sulfur battery 3 as a secondary battery capable of receiving and outputting a power, a bidirectional converter 4 having a direct current/alternate current converting function, and a transformer 9. The bidirectional converter 4 can be constituted of, for example, a chopper and/or an inverter/converter. It is to be noted that a plurality of systems each including the wind power generation device 7 and the sodium-sulfur battery 3 (the power storage compensation device 5) are arranged on occasion.

Fig. 4 shows a steady operation state in which the wind power generation device 7 generates and supplies the power to a load (not shown) and in which the power storage compensation device 5 (the sodium-sulfur battery 3) discharges and supplies the power to the load while compensating for the generated fluctuating power of the wind power generation device 7. The independent system 18 is usually operated in this steady operation state which is a steady operation mode. A power source of the control device 2 and the heater 6 is the power storage compensation device 5 (the sodium-sulfur battery 3).

In the steady operation state of the independent system 18, the power storage compensation device 5 (the sodium-sulfur battery 3) discharges and charges the power, and a power $P_N$ (a charged power $P_{NC}$ or a discharged power $P_{ND}$) measured by a power meter 42 compensates for the output fluctuation of the power (a power $P_G$ measured by a power meter 43) generated by the wind power generation device 7. Moreover, a power $P_H$ is supplied to the heater 6 and the control device 2. Specifically, to stably supply a power $P_L$ measured by a power meter 44 to the load, the charge/discharge of the sodium-sulfur battery 3 is controlled so that the power (a power $P_T$ measured by a power meter 41) output from the whole independent system 18 satisfies $P_T = P_G+P_{ND}-P_H = P_L$ ($P_{ND} = P_L-P_G+P_H$) or $P_T = P_G-P_{NC}-P_H = P_L$ ($-P_{NC} = P_L-P_G+P_H$) for at least a predetermined period (here, a power loss due to power forwarding is not taken into consideration), whereby the power $P_N$ is adjusted so that the power $P_T$ output from the whole independent system 18 is a stable power having a satisfactory quality.

The charge/discharge of the sodium-sulfur battery 3 can be controlled so that a charge end or discharge end is not reached, when a stored energy is managed and monitored by a control device or the like to change a limiter of the wind power generation device 7 (natural energy). For example, when $P_G < P_L+P_H$ for the predetermined period, the sodium-sulfur battery 3 properly discharges the power for the period, and the stored energy decreases. On the other hand, when $P_G > P_L+P_H$ for the predetermined period, the sodium-sulfur battery 3 properly charges the power for the period, and the stored energy increases.

When the sodium-sulfur battery 3 discharges or charges the power, mainly based on the output (the power $P_G$) from the wind power generation device 7, the power storage compensation device 5 changes the control target value of the bidirectional converter 4 so as to input or output the power for compensating for the output from the wind power generation device, whereby the power can be charged into or discharged from the sodium-sulfur battery 3 to absorb the output fluctuation of the wind power generation device 7. The stable power having a satisfactory quality can be supplied by using the renewable energy device (the wind power generation device 7) which hardly emits carbon dioxide and the sodium-sulfur battery 3 (the power storage compensation device 5). Consequently, the independent system 18 can be considered to be a preferable power generation system.

A control method of a sodium-sulfur battery according to the present invention can be utilized as a method for supplying a power to a heater of a sodium-sulfur battery included in a power storage compensation device, in an interconnected system where a power generation device which uses natural energy such as wind power, photovoltaic energy, geothermal energy or the like and whose output fluctuates is combined with the power storage compensation device to supply the power to a power system.

## Claims

1. A heater power supply method of a sodium-sulfur battery which supplies a power to a heater of the sodium-sulfur battery disposed in a power storage compensation device to compensate for the fluctuation of an output of a power generation device in an interconnected system where the power generation device whose output fluctuates is combined with the power storage compensation device to supply the power to a power system,
the method including the steps of:

supplying the output of the power generation device to the sodium-sulfur battery and supplying the output to the heater while controlling the charge of the sodium-sulfur battery so as to satisfy the following equation (1), when the power generation device generates the power and the sodium-sulfur battery does not reach a charge end during the service interruption of the power system:

$$P_G = P_H + P_{NC} \quad \ldots \quad (1)$$

wherein $P_G$: the output of the power generation device,
$P_H$: the power to be supplied to the heater, and
$P_{NC}$: the power to be charged into the sodium-sulfur battery.

2. The heater power supply method of the sodium-sulfur battery according to claim 1, wherein when the power generation device does not generate any power or the sodium-sulfur battery reaches the charge end during the service interruption of the power system, the discharge of the sodium-sulfur battery is performed, and the power is supplied to the heater by the discharge of the battery.

3. A heater power supply method of a sodium-sulfur battery, to supply a power to a heater of the sodium-sulfur battery disposed in a power storage compensation device to compensate for the fluctuation of an output of a power generation device in an independent system in which the power generation device whose output fluctuates is combined with the power storage compensation device to supply the power to a load,
the method including the steps of:

supplying the output of the power generation device to the sodium-sulfur battery and supplying the output to the heater while controlling the charge of the sodium-sulfur battery so as to satisfy the following equation (2), when the power generation device generates the power and the sodium-sulfur battery does not reach a charge end,

$$P_G = P_H + P_{NC} + P_L \quad \ldots \quad (2)$$

wherein $P_G$: the output of the power generation device,
$P_H$: the power to be supplied to the heater,
$P_{NC}$: the power to be charged into the sodium-sulfur battery, and
$P_L$: the power to be supplied to a general load.

4. The heater power supply method of the sodium-sulfur battery according to claim 3, wherein when the power generation device does not generate any power or the sodium-sulfur battery reaches the charge end, the discharge of the sodium-sulfur battery is performed, and the power is supplied to the heater by the discharge of the battery.

FIG.1

( WIND POWER GENERATION,
PHOTOVOLTAIC POWER
GENERATION,
GEOTHERMAL POWER
GENERATION OR THE LIKE)

FIG.2

( WIND POWER GENERATION,
PHOTOVOLTAIC POWER
GENERATION,
GEOTHERMAL POWER
GENERATION OR THE LIKE)

FIG.3

( WIND POWER GENERATION,
PHOTOVOLTAIC POWER
GENERATION,
GEOTHERMAL POWER
GENERATION OR THE LIKE)

FIG.4

18

44

$P_L$ —44

LOAD

$P_T$ —41

ON          ON

45

$P_H$        42          43

$P_N$        $P_G$

9

5 { 4

3

6          2          3          7

( WIND POWER GENERATION,
PHOTOVOLTAIC POWER
GENERATION,
GEOTHERMAL POWER
GENERATION OR THE LIKE)

**EUROPEAN SEARCH REPORT**

Application Number

EP 09 25 2005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 912 305 A (NGK INSULATORS LTD [JP]) 16 April 2008 (2008-04-16) * paragraphs [0033] - [0037] * * figure 1 * | 1-4 | INV. H01M10/39 H01M10/44 H01M10/50 |
| X | EP 1 143 595 A (TOKYO ELECTRIC POWER CO [JP]; NGK INSULATORS LTD [JP]) 10 October 2001 (2001-10-10) * paragraphs [0034] - [0042]; figures 4,5 * | 1-4 | |
| P,X | EP 2 001 098 A (NGK INSULATORS LTD [JP]) 10 December 2008 (2008-12-10) * paragraphs [0044] - [0047] * * figure 1 * | 1-4 | |
| A | JP 2002 334710 A (NIPPON TELEGRAPH & TELEPHONE) 22 November 2002 (2002-11-22) * abstract * | 1-4 | |
| A | EP 1 363 344 A (NGK INSULATORS LTD [JP]; TOKYO ELECTRIC POWER CO [JP]) 19 November 2003 (2003-11-19) * claims 1-5 * | 1-4 | TECHNICAL FIELDS SEARCHED (IPC) H01M H02J |
| A | JP 2003 077531 A (HITACHI LTD) 14 March 2003 (2003-03-14) * abstract * | 1-4 | |

The present search report has been drawn up for all claims

| Place of search | Date of completion of the search | Examiner |
|---|---|---|
| The Hague | 5 November 2009 | Knoflacher, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 25 2005

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2009

| Patent document cited in search report | | Publication date | Patent family member(s) | | Publication date |
|---|---|---|---|---|---|
| EP 1912305 | A | 16-04-2008 | AT | 432551 T | 15-06-2009 |
| | | | DK | 1912305 T3 | 17-08-2009 |
| | | | JP | 2008084677 A | 10-04-2008 |
| | | | US | 2008076010 A1 | 27-03-2008 |
| EP 1143595 | A | 10-10-2001 | AT | 397312 T | 15-06-2008 |
| | | | JP | 3505124 B2 | 08-03-2004 |
| | | | JP | 2001275273 A | 05-10-2001 |
| | | | US | 2001048286 A1 | 06-12-2001 |
| EP 2001098 | A | 10-12-2008 | JP | 2008236821 A | 02-10-2008 |
| | | | US | 2008224541 A1 | 18-09-2008 |
| JP 2002334710 | A | 22-11-2002 | NONE | | |
| EP 1363344 | A | 19-11-2003 | JP | 4030331 B2 | 09-01-2008 |
| | | | JP | 2003288950 A | 10-10-2003 |
| | | | US | 2003186111 A1 | 02-10-2003 |
| JP 2003077531 | A | 14-03-2003 | NONE | | |

EPO FORM P0459

For more details about this annex : see Official Journal of the European Patent Office, No. 12/82

**EP 2 157 654 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *The Journal of the Japan Society of Plasma Science and Nuclear Fusion Research,* 2004, vol. 80 (7), 563-567

- Additional Volume of Monthly Clean Technology. Service Interruption Brownout Phenomenon Countermeasure in Clean Room. Japan Industrial Publishing Co., Ltd, 64-69
- *AECV conference, Noordwijkerhout,* 2002, 1-9